# EUROPÄISCHE PATENTSCHRIFT

(11) **EP 3 027 937 B1**
(45) Veröffentlichungstag und Bekanntmachung des Hinweises auf die Patenterteilung: **06.09.2017**
(21) Anmeldenummer: 14744339.4
(22) Anmeldetag: 28.07.2014
(51) Int. Cl.: F16J 9/24

(54) **LEICHTMETALLKOLBEN**
ALLOY PISTON
PISTON EN ALLIAGE MÉTALLIQUE

(30) Priorität: 31.07.2013 DE 102013215018
(43) Veröffentlichungstag der Anmeldung: 08.06.2016
(73) Patentinhaber: Mahle International GmbH, 70376 Stuttgart (DE)
(72) Erfinder: BRAUNBECK, Alexander, 71723 Grossbottwar (DE); MAYER, Günther, 74357 Bönnigheim (DE)
(74) Vertreter: BRP Renaud & Partner mbB Rechtsanwälte Patentanwälte Steuerberater
(86) Internationale Anmeldenummer: PCT/EP2014/066167
(87) Internationale Veröffentlichungsnummer: WO 2015/014786

(56) Entgegenhaltungen:
- WO-A1-2014/019945
- DE-B- 1 248 368
- FR-A- 455 539
- FR-A- 858 512
- GB-A- 741 173
- US-A- 2 980 088

## Beschreibung

Die vorliegende Erfindung betrifft einen Leichtmetallkolben, insbesondere einen aus einer Aluminiumlegierung hergestellten Kolben, eines Zweitaktmotors mit zumindest einem Kolbenring und einer Verdrehsicherung für diesen zumindest einen Kolbenring gemäß dem Oberbegriff des Anspruchs 1. Die Erfindung betrifft außerdem ein Verfahren zur Herstellung eines derartigen Leichtmetallkolbens.

Aus der DE 1 248 368 A ist ein gattungsgemäßer Leichtmetallkolben mit zumindest einem Kolbenring und einer Verdrehsicherung für diesen Kolbenring bekannt. Die Verdrehsicherung umfasst dabei eine in eine Kolbenringnut eingebrachte Bohrung, in welche ein Stift eingepresst ist. Der Stift ist dabei als längs geschlitzte Hülse mit auf ihrer Außenfläche quer zur Längsrichtung verlaufenden Wülsten ausgebildet, in welche ein Bolzen eingetrieben ist, so dass die Wülste in den Werkstoff des Kolbens plastisch eindringen.

Bei gattungsgemäßen Leichtmetallkolben für Zweitaktbrennkraftmaschinen sind die Kolbenringe gegen ein unerwünschtes Verdrehen in Umfangsrichtung zu sichern, damit der Ringstoß nicht in die in der Zylinderlauffläche ausgebildeten Ein- und Auslasskanäle geraten kann. Hierfür wird üblicherweise eine Bohrung in eine Ringnut für den Kolbenring eingebracht und anschließend ein Stift in die Bohrung gepresst. Der Kolbenring stößt mit seinen beiden Ringstoßenden an den Stift an und wird so an einem unerwünschten Verdrehen gehindert. Problematisch bei bekannten Leichtmetallkolben, beispielsweise Aluminiumkolben, ist jedoch, dass sich der Stift lösen und dadurch eine zuverlässige Verdrehsicherung nicht weiter gewährleistet werden kann. Bewegt sich der Stift zudem nach außen, so ist auch eine Beschädigung einer Zylinderlauffläche nicht auszuschließen.

Aus der US 2,980,088 A ist ein Leichtmetallkolben eines Zweitaktmotors mit zumindest einem Kolbenring gemäß dem Oberbegriff des Anspruchs 1 bekannt, der über eine Verdrehsicherung gesichert ist.

Aus der FR 455 539 A ist ein Verfahren zur Herstellung eines Leichtmetallkolbens gemäß dem Oberbegriff des Anspruchs 6 bekannt.

Die vorliegende Erfindung beschäftigt sich daher mit dem Problem, für einen Leichtmetallkolben der gattungsgemäßen Art eine verbesserte Ausführungsform anzugeben, die sich insbesondere durch eine verbesserte Verdrehsicherung für einen Kolbenring auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, einen Stift einer Verdrehsicherung nicht mehr direkt in eine Bohrung in einem Leichtmetallkolben einzupressen, sondern vorab einen Eingussanker in das Material des Leichtmetallkolbens einzugießen und in diesem Eingussanker eine Bohrung für den Stift bzw. Sicherungsstift vorzusehen. Der erfindungsgemäße Leichtmetallkolben wird dabei in einem Zweitaktmotor, insbesondere einem Ottomotor mit vergleichsweise kleinem Hubraum, beispielsweise für Motorsägen, eingesetzt und besitzt zumindest einen Kolbenring sowie eine Verdrehsicherung für diesen Kolbenring. Erfindungsgemäß weist nun diese Verdrehsicherung zumindest einen in das Material des Leichtmetallkolbens eingegossenen Eingussanker auf, der üblicherweise aus Stahl bzw. Eisen ausgebildet ist und der ein deutlich verbessertes Widerlager für den Stift bzw. den Sicherungsstift bildet. Der Eingussanker wird dabei beim Herstellen des Leichtmetallkolbens in die Gussform desselben eingelegt und nach dem Entformen abgedreht, wobei daran anschließend eine Radialbohrung in den Eingussanker zur Aufnahme des Stiftes eingebracht wird. In dieser Bohrung wird der Stift eingepresst, wobei die Bohrung lediglich im Eingussanker oder aber darüber hinausgehend auch noch in das Material des Leichtmetallkolbens eingebracht werden kann. Somit ist es prinzipiell möglich, den Stift ausschließlich in der Bohrung des Eingussankers zu verpressen oder zusätzlich auch in der sich daran anschließenden Bohrung des Leichtmetallkolbens. Der Eingussanker kann beispielsweise auch aus NiResist ausgebildet sein und weist dabei einen Nickelgehalt von mehr als 20% auf. Hierdurch kann eine besonders hohe Korrosionsbeständigkeit sowie eine hohe Warmfestigkeit erzielt werden. Dabei weist der Eingussanker im Bereich des Stiftes einen nach radial innen gerichteten Vorsprung auf. Dieser Vorsprung kann beispielsweise in der Art eines Schwalbenschwanzes ausgebildet sein bzw. generell eine Hinterschnittkontur aufweisen, mittels welcher er den Eingussanker im Leichtmetallkolben fixiert. Dieser radial nach innen gerichtete Vorsprung dient gleichzeitig zur Aufnahme der den späteren Stift aufnehmenden Bohrung und wird formschlüssig vom Gussmaterial des Leichtmetallkolbens, beispielsweise von Aluminium, umschlossen. Die Hinterschnittkontur kann dabei zweidimensional oder dreidimensional sein, wobei in diesem Fall "zweidimensional" eine Hinterschnittkontur in lediglich einer Ebene bedeutet, wogegen "dreidimensional" eine Hinterschnittkontur in zwei orthogonalen Ebenen bedeutet. Eine dreidimensionale Hinterschnittkontur kann beispielsweise in der Art eines Pyramidenstumpfes ausgebildet sein, wogegen die zweidimensionale Hinterschnittkontur in der Art eines Schwalbenschwanzes ausgebildet sein kann.

Bei einer weiteren vorteilhaften Ausführungsform der erfindungsgemäßen Lösung ist der Eingussanker Bestandteil eines Ringträgers für den Kolbenring. Generell ist somit denkbar, dass der Eingussanker nicht nur zur Aufnahme des Stiftes der Verdrehsicherung dient und dadurch lediglich in einem kleinen Kreissegment angeordnet ist, sondern rein theoretisch auch zugleich die Funktion eines Ringträgers übernehmen kann. Ein derartiger Ringträger ist üblicherweise ebenfalls aus Stahl ausgebildet und in der Lage, die im Bereich der Kolbenringe auftretenden hohen Belastungen langfristig zu ertragen.

Die Erfindung beruht weiter auf dem allgemeinen Gedanken, ein Verfahren zur Herstellung eines derartigen Leichtmetallkolbens anzugeben, bei welchem zunächst ein Eingussanker in eine Gussform des Leichtmetallkolbens eingelegt wird. Der Eingussanker kann dabei lediglich den Bereich der späteren Verdrehsicherung betreffen oder aber ringförmig ausgebildet sein und zugleich einen Ringträger bilden. Anschließend wird der Leichtmetallkolben gegossen und ausgeformt. In einem weiteren Bearbeitungsschritt werden der Leichtmetallkolben gedreht und dabei der Eingussanker und die Kolbenmantelfläche spanend bearbeitet und zugleich eine Ringnut hergestellt, wobei der Eingussanker in der Ringnut liegt. Üblicherweise besitzt der Eingussanker stets einen ringförmigen Bereich, der jedoch bei entsprechend dünner Ausbildung beim späteren Drehen des Leichtmetallkolbens spanend abgehoben wird. Ist die spanende Bearbeitung, d.h. das Drehen des Leichtmetallkolbens, abgeschlossen, wird eine Bohrung, insbesondere eine Radialbohrung, in den Eingussanker eingebracht. Anschließend wird ein Sicherungsstift in die Bohrung eingepresst, wobei der Kolbenring so montiert wird, dass der Stift zwischen den Ringstoßenden des Kolbenrings liegt. Selbstverständlich ist auch denkbar, dass zunächst der Kolbenring in der Ringnut angeordnet und erst anschließend der Sicherungsstift bzw. der Stift in die Bohrung eingepresst wird.

Der ringförmige Bereich wird dabei beim spanabhebenden Drehen des Leichtmetallkolbens vollständig abgedreht, sodass in diesem Fall lediglich der Eingussanker im Bereich des späteren Stiftes im Leichtmetallkolben verbleibt. Dabei liegt somit der Eingussanker mit seinem ringförmigen Bereich vollständig außerhalb des Außendurchmessers des späteren Leichtmetallkolbens. Bei einer weiteren Ausführungsform weist der Eingussanker keinen ringförmigen Bereich auf, sondern ist lediglich als Segment ausgebildet und wird in dieser Form in die Gussform eingesetzt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Dabei zeigen, jeweils schematisch
- Fig. 1a: eine erste mögliche Ausführungsform eines erfindungsgemäßen Eingussankers mit einem zweidimensionalen Hinterschnitt am Vorsprung im Rohzustand,
- Fig.: 1b eine Schnittdarstellung durch einen Leichtmetallkolben mit einem gemäß der Fig. 1A gezeigten und eingebauten Eingussanker,
- Fig. 2: eine Ausführungsform des erfindungsgemäßen Eingussankers mit einem dreidimensionalem Hinterschnitt am Vorsprung ebenfalls im Rohzustand,
- Fig. 3: eine weitere Ausführungsform des erfindungsgemäßen Ringankers mit einem dreidimensionalen Hinterschnitt in unterschiedlichen Ansichten und Schnittdarstellungen bei wiederum unterschiedlichem Vorsprung,
- Fig. 4: einen Eingussanker ohne ringförmigen Bereich,
- Fig. 5: einen Eingussanker mit ringförmigem Bereich, der in fertig bearbeitetem Zustand einen Ringträger für einen Kolbenring bildet,
- Fig. 6: eine Darstellung wie in Fig. 1a, d.h. mit einem Vorsprung mit zweidimensionalem Hinterschnitt,
- Fig. 7: unterschiedliche Ansichten und Schnitte durch einen Leichtmetallkolben mit einem Eingussanker wie in Fig. 6 gezeigt.

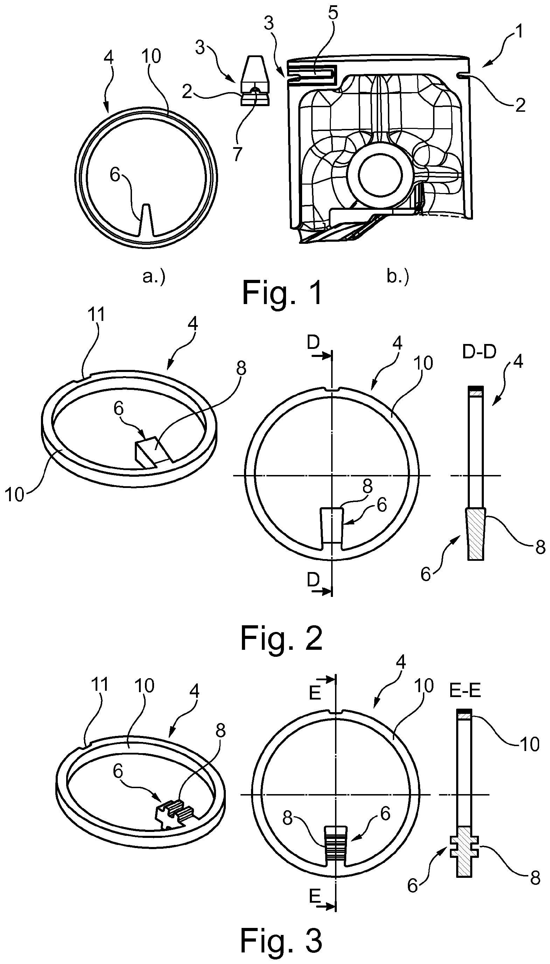

Entsprechend den Fig. 1, 5 und 7, weist ein erfindungsgemäßer Leichtmetallkolben 1, insbesondere ein Aluminiumkolben, eines Zweitaktbenzinmotors, zumindest eine Ringnut 2 zur Aufnahme eines nicht gezeigten Kolbenrings auf. Ebenfalls besitzt der Leichtmetallkolben 1 eine Verdrehsicherung 3 für den zumindest einen Kolbenring. Der Kolbenring ist üblicherweise als geschlitzter Ring ausgeführt und muss bei Zweitaktmotoren an einem unerwünschten Verdrehen gehindert werden, um insbesondere den Bereich von Ringstoßenden des Kolbenrings nicht in Bereiche der Ein- und Auslasskanäle gelangen zu lassen. Aus diesem Grund ist üblicherweise die Verdrehsicherung 3 vorgesehen, die eben jene unerwünschte Drehbewegung des Kolbenrings in Umfangsrichtung verhindert. Bisher wurde die Verdrehsicherung durch einen herkömmlichen Stift gebildet, der in einer Bohrung des Leichtmetallkolbens 1 verpresst wurde. Nachteilig hierbei ist jedoch, dass sich dieser Stift bei einem Verpressen im Leichtmetall des Leichtmetallkolbens 1 lösen kann. Erfindungsgemäß ist deshalb eine Verdrehsicherung 3 vorgesehen, die zumindest einen in das Material des Leichtmetallkolbens 1 eingegossenen Eingussanker 4 aufweist. Dieser Eingussanker 4 ist beispielsweise aus Stahl ausgebildet und kann insbesondere einschließlich eines Ringträgers oder ringförmigen Bereichs 10 als ein einziges metallisches Stanzteil aus einem Blech mit konstanter Dicke hergestellt werden, wodurch eine qualitativ hochwertige, zugleich aber auch kostengünstige Herstellbarkeit gewährleistet werden kann.

Die Verdrehsicherung 3 umfasst generell den zuvor genannten Eingussanker 4 sowie einen diesen in Radialrichtung durchstoßenden Stift 5, der auch als Sicherungsstift bezeichnet werden kann. Im Bereich des Stiftes 5 besitzt der Eingussanker 4 einen nach radial innen gerichteten Vorsprung 6, in welchen zum Herstellen der Verdrehsicherung eine Bohrung 7 eingebracht wird, in welche der Stift 5 eingepresst werden kann. Die Bohrung 7 kann dabei ausschließlich innerhalb des Vorsprungs 6 begrenzt liegen, wobei selbstverständlich auch ein Weiterführen der Bohrung 7 in das Material des Leichtmetallkolbens 1 denkbar ist.

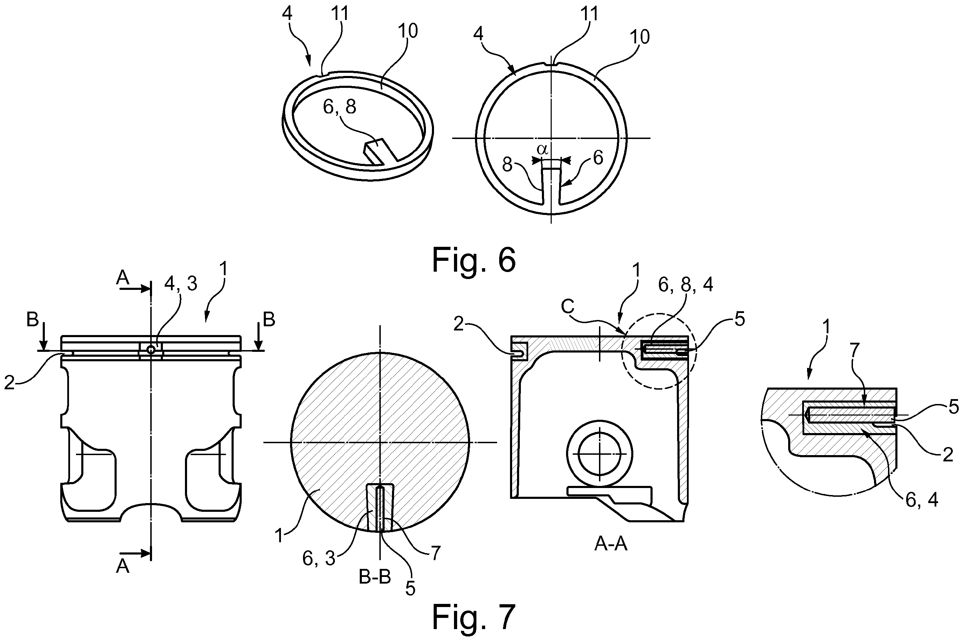

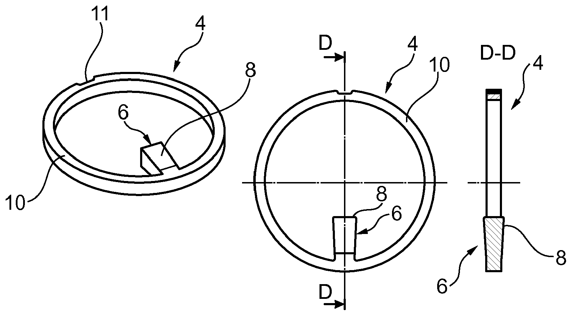

Betrachtet man die Vorsprünge der Eingussanker 4 gemäß den Fig. 2, 3 sowie 5 bis 7, so kann man erkennen, dass diese eine Hinterschnittkontur 8 aufweisen, über welche der Vorsprung 6 im Leichtmetallkolben 1 durch das diese Hinterschnittkontur 8 umfließende Gussmaterial fixiert ist. Die Hinterschnittkontur 8 kann dabei zweidimensional ausgebildet sein, d.h. beispielsweise in der Art eines Schwalbenschwanzes mit paralleler Ober- und Unterseite, wie dies gemäß der Fig. 6 dargestellt ist. Diese Anordnung kann besonders kostengünstig aus einem Blech entsprechender Dicke ausgestanzt und im Kolben durch Eingießen zuverlässig formschlüssig verankert werden. Die Kontur kann aber auch dreidimensional ausgebildet werden, wie dies beispielsweise gemäß den Fig. 2 und 3 dargestellt ist, wobei die Hinterschnittkontur 8 gemäß der Fig. 2 beispielsweise in der Art eines Pyramidenstumpfes und gemäß Fig. 3 in Form von axial vorstehenden Rippen ausgebildet ist. Die dreidimensionale Hinterschnittkontur eröffnet vielfältige weitere Möglichkeiten der Formgestaltung des Eingussankers, die eine optimale Verankerung im Kolben sicherstellen.

Generell kann der Eingussanker 4 auch Bestandteil eines Ringträgers 9 für den Kolbenring sein.

Der Leichtmetallkolben 1 lässt sich dabei wie folgt herstellen: Zunächst wird der Eingussanker 4 in eine Gussform des Leichtmetallkolbens 1 eingelegt und anschließend mit dem Leichtmetall, beispielsweise mit Aluminium, umgossen. Anschließend wird der Leichtmetallkolben 1 ausgeformt. Um eine optimale Mantelfläche des Leichtmetallkolbens 1 zu erreichen, wird dieser gedreht und dabei der Eingussanker 4 und die Kolbenmantelfläche spanend bearbeitet. In der gleichen Weise wird auch die Ringnut 2 für den späteren Kolbenring hergestellt, wobei der Eingussanker 4 in der Ringnut 2 liegt. Anschließend wird die Bohrung 7 in den Eingussanker 4 eingebracht und der Stift 5 in die Bohrung 7 eingepresst. Abschließend wird der Kolbenring so montiert, dass der Stift 5 zwischen den Ringstoßenden des Kolbenrings liegt. Unter "Ringstoßenden" versteht man dabei die jeweils freien, sich gegenüberliegenden Enden des geschlitzten Kolbenrings.

Betrachtet man die Eingussanker gemäß den Fig. 1 bis 3 und 6, so kann man erkennen, dass diese einen ringförmigen Bereich 10 aufweisen, der jedoch üblicherweise außerhalb des späteren Außendurchmessers des Leichtmetallkolbens 1 liegt und somit beim Drehen bzw. spanenden Bearbeiten des Leichtmetallkolbens 1 vollständig entfernt wird, so dass ausschließlich der Eingussanker 4 im Bereich des Vorsprungs 6 im fertigen Kolben verbleibt. Der ringförmige Bereich 10 weist bevorzugt einen auf die Gießform abgestimmten Durchmesser auf und ermöglicht beim Einsetzen in die Gießform eine einfache und genaue Positionierung. Im ringförmigen Bereich 10 des Eingussankers 4 ist zugleich eine Kerbe 11 vorgesehen, die mit einem Vorsprung in der nicht dargestellten Gießform zusammenwirkt. Dadurch wird der Eingussanker 4 in der Gussform auch in der Umfangsrichtung in der richtigen Position angeordnet und fixiert.

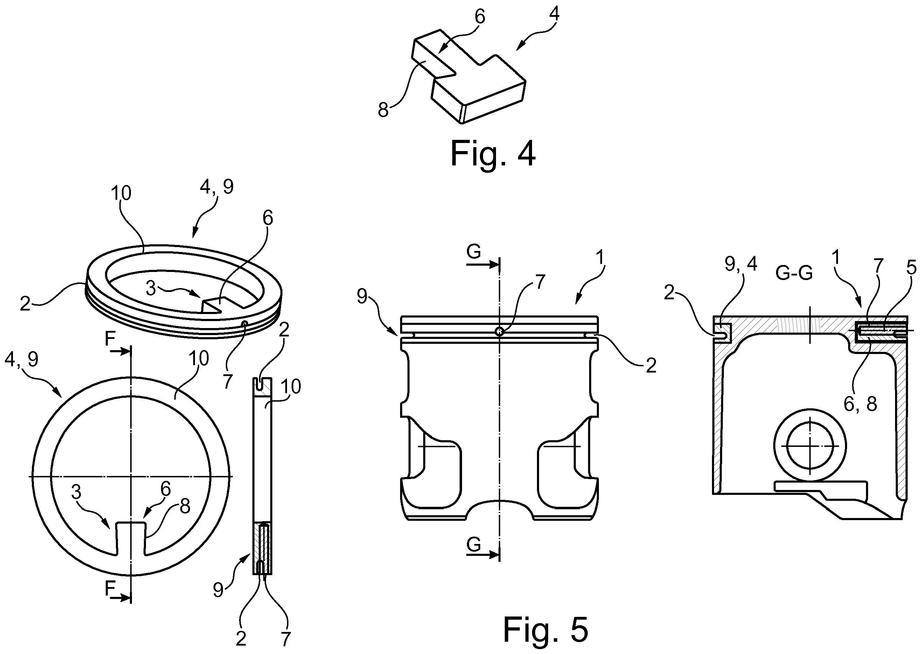

Betrachtet man den Eingussanker 4 gemäß der Fig. 5, so kann bei diesem einen ringförmigen Bereich 10 erkennen, der eine deutlich größere radiale Dicke aufweist, als die ringförmigen Bereiche 10 beispielsweise der Eingussanker 4 der Fig. 1 bis 3 und 6. Dieser ringförmige Bereich 10 des Eingussankers 4 gemäß der Fig. 5 liegt nicht komplett außerhalb des späteren Außendurchmessers des Leichtmetallkolbens 1, sondern auch innerhalb und bildet dadurch später den Ringträger 9 bzw. die Ringnut 2, was auch in der Schnittdarstellung G-G deutlich zu sehen ist. Die Schnittdarstellung F-F zeigt dabei den Eingussanker 4 in fertig bearbeitetem Zustand, d.h. mit darin eingebrachter Ringnut 2. Demgegenüber weist beispielsweise der gemäß der Fig. 6 dargestellte Eingussanker 4 einen lediglich dünnen ringförmigen Bereich 10 auf, der bei fertiggestelltem Leichtmetallkolben 1 vollständig abgedreht ist, wie dies beispielsweise in Schnittdarstellungen A-A sowie B-B gemäß der Fig. 7 dargestellt ist.

Generell kann der Eingussanker 4 auch gänzlich ohne ringförmigen Bereich 10 hergestellt werden, wie dies beispielsweise gemäß der Fig. 4 dargestellt ist, wobei in diesem Fall eine entsprechende prismenförmige Ausnehmung in der Gussform für den Leichtmetallkolben 1 vorgesehen wird, um den Eingussanker 4 während des Gießens zu halten und zu fixieren. Dabei werden Eingussanker 4 ohne oder mit einem abzudrehenden ringförmigen Bereich 10 durch die Hinterschnitte des Vorsprungs 6 im Kolben in Radialrichtung fixiert. Bleibt der innere Teil des ringförmigen Bereiches 10 als ein umlaufender Ringträger im fertigen Kolben erhalten, kann der Vorsprung 6 dagegen auch ohne eigene Hinterschnitte ausgebildet sein, wie dies z.B. in Fig. 1a gezeigt ist, da ihn der Ringträger in Radialrichtung sichert.

Mit dem erfindungsgemäßen Eingussanker 4 ist es möglich, den Stift 5 in den Eingussanker 4 zu pressen und dadurch deutlich besser zu fixieren, als dies bei einem bisherigen Einpressen in das Material des Leichtmetallkolbens 1 möglich ist.

## Patentansprüche

1. Leichtmetallkolben (1), insbesondere ein aus einer Aluminiumlegierung hergestellter Kolben, eines Zweitaktmotors mit zumindest einem Kolbenring und einer Verdrehsicherung (3) für den zumindest einen Kolbenring,
**dadurch gekennzeichnet,**
- **dass** die Verdrehsicherung (3) zumindest einen in das Material des Leichtmetallkolbens (1) eingegossenen Eingussanker (4) aufweist,
- **dass** die Verdrehsicherung (3) den Eingussanker (4) und einen diesen in Radialrichtung durchstoßenden Stift (5) umfasst,
- **dass** der Eingussanker (4) im Bereich des Stiftes (5) einen nach radial innen gerichteten Vorsprung (6) aufweist.

2. Leichtmetallkolben nach Anspruch 1,
**dadurch gekennzeichnet,**
- **dass** der Eingussanker (4) aus Stahl ausgebildet ist, und/oder
- **dass** der Eingussanker (4) als metallisches Stanzteil ausgebildet ist.

3. Leichtmetallkolben nach Anspruch 1 oder 2,
**dadurch gekennzeichnet,**
**dass** der Vorsprung (6) eine Hinterschnittkontur (8) aufweist, mittels welcher er im Leichtmetallkolben (1) fixiert ist.

4. Leichtmetallkolben nach einem der Ansprüche 1 bis 3,
**dadurch gekennzeichnet,**
**dass** der Eingussanker (4) Bestandteil eines Ringträgers (9) für den Kolbenring ist.

5. Leichtmetallkolben nach einem der Ansprüche 1 bis 4,
**dadurch gekennzeichnet,**
- **dass** der Stift (5) bei montierter Verdrehsicherung (3) in einer zuvor in den Eingussanker (4) eingebrachten Bohrung (7) verpresst ist, oder
- **dass** der Stift (5) bei montierter Verdrehsicherung (3) in einer zuvor in den Eingussanker (4) und den Leichtmetallkolben (1) eingebrachten Bohrung (7) verpresst ist.

6. Verfahren zur Herstellung eines Leichtmetallkolbens (1) nach einem der Ansprüche 1 bis 5, bei dem
- ein Eingussanker (4) in eine Gussform des Leichtmetallkolbens (1) eingelegt wird,
- der Leichtmetallkolben (1) gegossen und ausgeformt wird,
- der Leichtmetallkolben (1) gedreht und dabei der Eingussanker (4) und die Kolbenmantelfläche spanend bearbeitet und eine Ringnut (2) hergestellt werden, wobei der Eingussanker (4) in der Ringnut (2) liegt,
**dadurch gekennzeichnet, dass**
- eine Bohrung (7) in den Eingussanker (4) eingebracht wird,
- ein Stift (5) in die Bohrung (7) eingepresst wird,
- der Kolbenring so montiert wird, dass der Stift (5) zwischen den Ringstoßenden des Kolbenrings liegt,
- der Eingussanker (4) einen ringförmigen Bereich (10) aufweist, der beim Drehen vollständig abgedreht wird, so dass lediglich der Eingussanker (4) im Bereich des späteren Stiftes (5) verbleibt.

## Claims

1. Light alloy piston (1), in particular a piston produced from an aluminium alloy, of a two-stroke motor having at least one piston ring and one anti-rotation device (3) for the at least one piston ring,
**characterised in that**,
- the anti-rotation device (3) comprises at least one lamination anchor (4) embedded into the material of the light alloy piston (1),
- the anti-rotation device (3) comprises the lamination anchor (4) and a pin (5) piercing said lamination anchor in the radial direction,
- the lamination anchor (4) comprises in the region of the pin (5) a projection (6) directed radially inwards.

2. Light alloy piston according to claim 1,
**characterised in that**
- the lamination anchor (4) is configured from steel, and/or
- the lamination anchor (4) is configured from metallic stamped parts.

3. Light alloy piston according to claim 1 or 2,
**characterised in that**
the projection (6) comprises an indentation contour (8) by means of which said projection is fixed in the light alloy piston (1).

4. Light alloy piston according to any one of claims 1 to 3,
**characterised in that**
the lamination anchor (4) is part of a ring carrier (9) for the piston ring.

5. Light alloy piston according to any one of claims 1 to 4,
**characterised in that**
- the pin (5) is pressed in a borehole (7) previously introduced into the lamination anchor (4) when the anti-rotation device (3) is mounted, or
- the pin (5) is pressed in a borehole (7) previously introduced into the lamination anchor (4) and the light alloy piston (1) when the anti-rotation device (3) is mounted.

6. Method for producing a light alloy piston (1) according to any one of claims 1 to 5, in which
- a lamination anchor (4) is inserted into a mould of the light alloy piston (1),
- the light alloy piston (1) is cast and shaped,
- the light alloy piston (1) is rotated and in doing so the lamination anchor (4) and the piston lateral surface are machined and a ring groove (2) produced, wherein the lamination anchor (4) is located in the ring groove (2),
**characterised in that**
- a borehole (7) is introduced into the lamination anchor (4),
- a pin (5) is pressed into the borehole (7),
- the piston ring is mounted such that the pin (5) is located between the ring impact ends of the piston ring,
- the lamination anchor (4) comprises an annular region (10) which is turned fully when rotated such that only the lamination anchor (4) remains in the region of the subsequent pin (5).

## Revendications

1. Piston en métal léger (1), en particulier piston fabriqué à partir d'un alliage d'aluminium, d'un moteur à deux temps comprenant au moins un segment de piston et un système de sécurité anti-rotation (3) pour l'au moins un segment de piston,
**caractérisé en ce**
- **que** le système de sécurité anti-rotation (3) présente au moins un système d'ancrage de coulée (4) coulé dans le matériau du piston en métal léger (1),
- **que** le système de sécurité anti-rotation (3) comprend le système d'ancrage de coulée (4) et une tige (5) transperçant ce dernier dans la direction radiale,
- **que** le système d'ancrage de coulée (4) présente dans la zone de la tige (5) une partie faisant saillie (6) orientée vers l'intérieur radialement.

2. Piston en métal léger selon la revendication 1,
**caractérisé en ce**
- **que** le système d'ancrage de coulée (4) est réalisé à partir d'acier, et/ou
- **que** le système d'ancrage de coulée (4) est réalisé sous la forme d'une pièce estampée métallique.

3. Piston en métal léger selon la revendication 1 ou 2,
**caractérisé en ce**
**que** la partie faisant saillie (6) présente un contour de contre-dépouille (8), au moyen duquel elle est fixée dans le piston en métal léger (1).

4. Piston en métal léger selon l'une quelconque des revendications 1 à 3, **caractérisé en ce**
**que** le système d'ancrage de coulée (4) fait partie intégrante d'un support de segment (9) pour le segment de piston.

5. Piston en métal léger selon l'une quelconque des revendications 1 à 4, **caractérisé en ce**
- **que** la tige (5) est comprimée dans un alésage (7) pratiqué au préalable dans le système d'ancrage de coulée (4) lorsque le système de sécurité anti-rotation (3) est monté, ou
- **que** la tige (5) est comprimée dans un alésage (7) pratiqué au préalable dans le système d'ancrage de coulée (4) et dans le piston en métal léger (1) lorsque le système de sécurité anti-rotation (3) est monté.

6. Procédé servant à fabriquer un piston en métal léger (1) selon l'une quelconque des revendications 1 à 5, dans le cadre duquel
- un système d'ancrage de coulée (4) est placé dans un moule de coulée du piston en métal léger (1),
- le piston en métal léger (1) est coulé et déformé,
- le piston en métal léger (1) est tourné et le système d'ancrage de coulée (4) et la surface extérieure de piston sont dans ce cadre usinés par enlèvement de copeaux et une rainure de segment (2) est fabriquée, dans lequel le système d'ancrage de coulée (4) se trouve dans la rainure de segment (2),
**caractérisé en ce que**
- un alésage (7) est pratiqué dans le système d'ancrage de coulée (4),
- une tige (5) est enfoncée dans l'alésage (7),
- le segment de piston est monté de telle sorte que la tige (5) se situe entre les extrémités de jonction de segment du segment de piston,
- le système d'ancrage de coulée (4) présente une zone (10) de forme annulaire, qui est complètement retirée au tour lors de la rotation de sorte qu'il ne reste que le système d'ancrage de coulée (4) dans la zone de la tige (5) future.
